# EUROPÄISCHE PATENTSCHRIFT

(11) **EP 1 441 927 B1**
(45) Veröffentlichungstag und Bekanntmachung des Hinweises auf die Patenterteilung: **24.06.2009**
(21) Anmeldenummer: 02785339.9
(22) Anmeldetag: 31.10.2002
(51) Int. Cl.: B60R 16/02, G08B 21/00, B60K 28/06

(54) **INFORMATIONSSYSTEM IN EINEM FAHRZEUG MIT FAHRSTYLABHÄNGIGER ERZEUGUNG DER AUSZUGEBENDEN INFORMATIONEN**
INFORMATION SYSTEM IN A MOTOR VEHICLE WITH DRIVING-STYLE-DEPENDENT PRODUCTION OF INFORMATION TO BE OUTPUTTED
SYSTEME D'INFORMATION EMBARQUE DANS UN VEHICULE PERMETTANT DE PRODUIRE DES INFORMATIONS EN FONCTION DU STYLE DE CONDUITE

(30) Priorität: 06.11.2001 DE 10153987
(43) Veröffentlichungstag der Anmeldung: 04.08.2004
(73) Patentinhaber: Daimler AG, 70327 Stuttgart (DE)
(72) Erfinder: BIHLER, Edgar, 71032 Böblingen (DE); DOBLER, Günter, 73776 Altbach (DE); PAVIOT, Florent,, 01600 Tévoux (FR); ROTHE, Siegfried, 73770 Denkendorf (DE)
(86) Internationale Anmeldenummer: PCT/EP2002/012144
(87) Internationale Veröffentlichungsnummer: WO 2003/039914

(56) Entgegenhaltungen:
- EP-A- 1 013 509
- WO-A-01/58724
- WO-A-02/058962
- DE-A- 3 817 495
- DE-A- 4 120 069
- US-A- 5 467 277

## Beschreibung

Die Erfindung betrifft ein Informationssystem in einem Fahrzeug gemäß dem Oberbegriff des Anspruchs 1 oder 4.

Ein ähnliches Informationssystem ist aus der DE 199 52 857 C1 bekannt. Das Informationssystem filtert darzustellende Informationen aus verschiedenen Informationsquellen in Abhängigkeit vom Gemütszustand des Fahrers. Der Gemütszustand des Fahrers wird über eine Kamera und/oder ein Mikrofon ermittelt, indem aufgenommene Bild- und/oder Tonmuster des Fahrers mit abgelegten Mustern verglichen werden und so ermittelt wird, ob der Fahrer verärgert, krank oder anderweitig gestört ist.

Die nachveröffentlichte WO 02/058 962 A zeigt ein Informationssystem nach dem Oberbegriff.

Aus der DE 197 34 307 C2 ist eine Vorrichtung zur Überwachung und/oder Beeinflussung des Fahrzeugverhaltens bekannt, die in Abhängigkeit davon, ob die Blickrichtung des Fahrers von der Fahrtrichtung abweicht, ein Warnsignal erzeugt oder auf die Lenkung einwirkt. Die Blickrichtung des Fahrers wird durch eine Kamera ermittelt.

Aufgabe der Erfindung ist es, eine verbesserte Informationsausgabe für den Fahrer zu ermöglichen.

Die Erfindung löst diese Aufgabe durch die Bereitstellung eines Informationssystems in einem Fahrzeug mit den Merkmalen des Anspruchs 1, 4 oder 7. Die abhängigen Ansprüche betreffen vorteilhafte Aus- und Weiterbildungen der Erfindung.

Das Informationssystem gibt Informationen von mehreren Informationsquellen aus. Als auszugebende Informationen werden solche Informationen verstanden, die den Insassen des Fahrzeugs, insbesondere dem Fahrer, zur Wahrnehmung bereitgestellt werden. Informationen umfassen z. B. Warnungen und Hinweise. Um die Ausgabehäufigkeit der Informationen auf den Zustand und/oder das Verhalten des Fahrers abzustimmen, wird die Erzeugung der Informationen der Informationsquellen durch den Fahrerzustand und/oder das Fahrerverhalten beeinflusst. Selbstverständlich ist es auch möglich, dass das Informationssystem andere Fahrzeuginsassen und ihren Zustand und/oder ihr Verhalten ermittelt und analog zum Fahrerzustand und/oder Fahrerverhalten darauf reagiert. Es findet also eine Art Rückkopplung des Fahrerzustands und/oder des Fahrerverhaltens an die Informationsquellen statt, um deren Empfindlichkeit zu verändern.

Gemäß der Erfindung werden zwei Kategorien von fahrerzustandsrelevanten bzw. fahrerverhaltensrelevanten Daten erkannt. Beim Auftreten von fahrerzustandsrelevanten bzw. fahrerverhaltensrelevanten Daten der ersten Kategorie ist der Fahrer in einem Zustand, in dem er sich auf seine Fahraufgabe konzentriert, bzw. verhält er sich so, dass er aktiv fährt. Beim Vorliegen von fahrerzustandsrelevanten bzw. fahrerverhaltensrelevanten Daten der ersten Kategorie erkennt das System, dass der Fahrer auf die Fahraufgabe konzentriert ist bzw. aktiv kuppelt, lenkt, Gas gibt, etc. Beim Ausbleiben von Daten der ersten Kategorie ermittelt das System ein Fahrerverhalten, bei dem der Fahrer nicht aktiv fährt und/oder einen Fahrerzustand, bei dem die Fahrerkondition nachlässt, d. h. der Fahrer wird müde. Beim Auftreten von fahrerzustandsrelevanten bzw. fahrerverhaltensrelevanten Daten der zweiten Kategorie ist der Fahrer mit anderen Dingen als der Fahraufgabe beschäftigt, z. B. mit der Bedienung von Komfortsystemen, sein Zustand ist, dass der Fahrer abgelenkt und/oder unkonzentriert ist, eben nicht auf die Fahraufgabe konzentriert ist. Diese Ausführung der Erfindung hat den Vorteil, dass das Informationssystem ermittelt, ob die Ausgabe einer auszugebenden Information, insbesondere eines Fahrerassistenzsystems, zu diesem Zeitpunkt wirklich nötig ist, oder ob der Fahrer in diesem Moment die Verkehrssituation aufmerksam beobachtet oder sogar bewusst herbeiführt.

Ein Beispiel einer vorteilhaften Ausführung der Erfindung ist, dass das Informationssystem bei einer vom Fahrer bewusst herbeigeführten Fahrsituation, d. h. beim Auftreten von fahrerzustandsrelevanten bzw. fahrerverhaltensrelevanten Daten der ersten Kategorie, die Informationen ausfiltert und/oder die Informationsquelle die Erzeugung von Informationen drosselt. Das bedeutet, dass das Informationssystem die Ausgabe solcher Informationen verzögert oder unterdrückt, die in dieser Situation störend oder sogar eine zusätzliche Belastung für den Fahrer wären. Alternativ und/oder zusätzlich dazu wird die Empfindlichkeit von Informationsquellen, insbesondere eines Fahrerassistenzsystems verringert, so dass bereits weniger auszugebende Informationen durch die Informationsquelle generiert werden. Werden fahrerzustandsrelevanten bzw. fahrerverhaltensrelevanten Daten der zweiten Kategorie erkannt, so wird die Ausgabe von Informationen eher gefördert und/oder die Empfindlichkeit der Informationsquelle, z. B. des Fahrerassistenzsystems, erhöht, da z. B. Informationen eines Fahrerassistenzsystems den unaufmerksamen Fahrer vor einem Unfall bewahren können. Insbesondere geht das Informationssystem nach einem Zustand, in dem es weniger empfindlich war bzw. mehr Informationen ausgefiltert hat, wieder in einen Zustand höherer Empfindlichkeit, wenn Daten der zweiten Kategorie erkannt werden. Dieser empfindlichere Zustand wird während einer Zeitdauer T2₀ aufrechterhalten. T2₀ kann beliebig gewählt werden und u. U. auch vom Fahrer selbst eingestellt werden oder in einem lernenden System an den Fahrer angepasst werden.

Das erfindungsgemäße Informationssystem ermöglicht es also, dass der Fahrer z. B. bewusst einen Fahrspurwechsel vornehmen kann, ohne dass das Fahrerassistenzsystem ihn beim Überschreiten einer Markierung unnötigerweise warnt, da das Informationssystem die Lenkbewegung als Daten der ersten Kategorie wahrnimmt, und daraufhin weniger empfindlich ist bzw. mehr Informationen ausfiltert. Bedient der Fahrer nach dem Fahrspurwechsel z. B. sein Radio, so wird dies als Daten der zweiten Kategorie erkannt und mehr Informationen werden ausgegeben bzw. erzeugt. Beim Bedienen des Radios wird der Fahrer also durch eine Warninformation auf das Verlassen der Fahrspur aufmerksam gemacht. Diese an den Fahrerzustand und/oder das Fahrerverhalten angepasste Ausgabe und/oder Erzeugung von Informationen des Fahrerassistenzsystems erhöht die Akzeptanz des Fahrerassistenzsystems beim Fahrer. Die höhere Akzeptanz des Fahrerassistenzsystems beim Fahrer wiederum führt zu einer verbesserten Fahrsicherheit.

Das Informationssystem ermittelt in einer vorteilhaften Weiterbildung der Erfindung den Zustand des Fahrers und/oder das Verhalten des Fahrers. In Abhängigkeit vom Fahrerzustand und/oder vom Fahrerverhalten wird in der Informationsquelle die Häufigkeit, mit der Informationen erzeugt werden, verändert. Dies kann z. B. über einen Zwischenschritt geschehen, der darin besteht, aus dem Zustand des Fahrers und/oder dem Verhalten des Fahrers auf den Informationsbedarf des Fahrers zu schließen und in Abhängigkeit vom Informationsbedarf des Fahrers die Häufigkeit der Informationserzeugung zu variieren. Die Beeinflussung der Erzeugung der Informationen hat den Vorteil, dass direkt auf die Informationsquelle zurückgewirkt wird und der gestiegene bzw. geringere Informationsbedarf des Fahrers bereits bei der Erzeugung der Informationen berücksichtigt wird. Auf diese Weise kann die Informationsquelle bereits bei der Erzeugung der Information z. B. berücksichtigen, wie dicht die Informationen aufeinander folgen und wie aufmerksam der Fahrer ist und/oder mit was er beschäftigt ist, und den Gehalt der Informationen entsprechend anpassen. Auf diese Weise wird also eine Adaption der Häufigkeit, mit der Informationsquellen Informationen zur Ausgabe bereitstellen, an den Fahrerzustand und/oder an das Fahrerverhalten erreicht. Die Häufigkeit kann insbesondere auch die Häufigkeit Null, d. h. das Abschalten der Ausgabe, umfassen.

In einer vorteilhaften Weiterbildung der Erfindung werden die bereits erzeugten, also die auszugebenden Informationen, vom Informationssystem in Abhängigkeit vom Fahrerzustand und/oder Fahrerverhalten gefiltert. Dies ermöglicht, zusätzlich zur Erzeugung auch die Filterung der Informationen durch das Informationssystem genau auf die Bedürfnisse des Fahrers abzustimmen.

Das Informationssystem gibt Informationen von mehreren Informationsquellen aus und filtert sie in Abhängigkeit vom Fahrerverhalten. Dies hat den Vorteil, dass die Filterung der Informationen von mehreren Informationsquellen das berücksichtigt, womit sich der Fahrer gerade beschäftigt, was er gerade tut. Das Informationssystem ermittelt hierfür das Verhalten des Fahrers. In einem optionalen Zwischenschritt kann das Informationssystem vom Verhalten des Fahrers auf den Informationsbedarf des Fahrers schließen und in Abhängigkeit vom Informationsbedarf des Fahrers die Filterung der auszugebende Informationen variieren. Dies entlastet den Fahrer und/oder erregt in kritischen Situationen seine Aufmerksamkeit, wenn er z. B. gerade nebenbei etwas anderes tut, und verbessert dadurch die Sicherheit.

In einer vorteilhaften Ausbildung der Erfindung wird die Informationsfilterung nicht nur vom Verhalten des Fahrers, also womit er sich beschäftigt, was er tut, beeinflusst, sondern auch von seinem Zustand, d. h. z. b. ob er aufmerksam, abgelenkt, etc. ist. Das Informationssystem ermittelt hierfür den Zustand des Fahrers. In einem optionalen Zwischenschritt kann das Informationssystem vom Zustand des Fahrers auf den Informationsbedarf des Fahrers schließen und in Abhängigkeit vom Informationsbedarf des Fahrers die Filterung der auszugebende Informationen variieren. Dies entlastet den Fahrer und/oder erregt in kritischen Situationen seine Aufmerksamkeit, wenn er z. B. gerade verärgert oder abgelenkt ist, und verbessert dadurch die Sicherheit.

Das Informationssystem ermittelt anhand von Daten von Fahrsystemen im Fahrzeug und/oder Komfortsystemen im Fahrzeug das Fahrerverhalten, das sog. "driver behaviour", und/oder den Zustand des Fahrers. Diese Daten liegen im Fahrzeug zur Bewältigung der Fahraufgabe und/oder zur Erhöhung des Komforts für den Fahrer im Fahrzeug bereits vor. Diese Daten sind für das Verhalten und/oder den Zustand des Fahrers relevant und werden in geeigneter Weise vom Informationssystem ausgewertet. Die auszugebenden Informationen von verschiedenen Informationsquellen werden dann in Abhängigkeit vom Fahrerzustand gefiltert und/oder von den Informationsquellen in Abhängigkeit vom Fahrerzustand erzeugt. Daten, die das Fahrerverhalten kennzeichnen können z. B. Daten bzgl. der Bedienung von Komfortsystemen des Fahrzeugs und/oder Lenken, Gas geben, Kuppeln, Bremsen usw. sein. Treten Daten auf, aus denen hervorgeht, dass der Fahrer in einer bestimmten Art und Weise lenkt, Gas gibt, kuppelt und/oder bremst etc., so liegt der zwingende Schluss vor, dass er in einem Zustand ist, in dem er sich auf die Fahraufgabe konzentriert. Liegen Daten vor, die auf ein Verhalten schließen lassen, dass der Fahrer Komfortsysteme bedient, so liegt der zwingende Schluss vor, dass der Fahrer in einem Zustand ist, in dem er abgelenkt ist. Fehlen dagegen Daten, die auf eine aktive Beschäftigung mit der Fahraufgabe schließen lassen, so könnte das darauf hindeuten, dass der Fahrer müde ist und/oder seine Kondition nachlässt. Dieser Schluss ist aber nicht zwingend, da es auch einfach sein kann, dass die Strecke keine Aktivität vom Fahrer erfordert. Ausgehend von den selben Daten kann also auf den Fahrerzustand und/oder auf das Fahrerverhalten geschlossen werden, wobei die Schlüsse zwingend sein können oder aber nur auf einen Zustand bzw. ein Verhalten hindeutend sein können.

Der Vorteil der Erfindung ist, dass das Informationssystem die Auswertung von bereits im Fahrzeug vorliegenden fahrerzustandsrelevanten bzw. fahrerverhaltensrelevanten Daten vornimmt und zusätzliche Einrichtungen zur Aufnahme von fahrerzustandsrelevanten bzw. fahrerverhaltensrelevanten Daten, wie z. B. Mikrofon oder Kamera, nicht zwingend nötig sind.

Vorteilhafterweise umfassen die Fahrsysteme des Fahrzeugs mindestens ein Bremssystem, mindestens ein Kupplungssystem, mindestens ein Lenksystem und/oder mindestens ein Beschleunigungssystem. Die Fahrsysteme können z. B. auch sog. X-by-Wire Systeme, wie z. B. Drive-by-Wire, Steer-by-Wire oder Brake-by-Wire Systeme umfassen. Im Fall eines Steer-by-Wire Systems kann dann das Lenkrad z. b. durch einen Joystick oder einen Doppeljoystick ersetzt sein. Diese Fahrsysteme sind in modernen Fahrzeugen untereinander zum Datenaustausch verbunden. Diese Daten, die zwischen den Fahrsystemen ausgetauscht werden, können dann auf einfache Weise durch das Informationssystem als fahrerzustandrelevante und/oder fahrerverhaltensrelevante Daten Verwendung finden. Diese Daten sind z. B. durch die Bedienung des Brems-, Kupplungs- und/oder Gaspedals und/oder die Bedienung des Lenkrads erzeugte Daten.

Vorteilhafterweise umfassen die Komfortssysteme des Fahrzeugs mindestens eines der Systeme, wie z. B. Klimaanlage, Navigationssystem, Audiosystem und/oder Einstellsysteme für die Sitzverstellung, Lenkradverstellung, Spiegelverstellung und/oder die Betätigung des Fensterhebers, der Lenkradtasten und/oder der Sitzmemorytasten. Diese Komfortsysteme sind in modernen Fahrzeugen untereinander zum Datenaustausch verbunden. Diese Daten, die zwischen den Komfortsystemen ausgetauscht werden, können dann auf einfache Weise durch das Informationssystem als fahrerzustandrelevante und/oder fahrerverhaltensrelevante Daten Verwendung finden. Diese Daten sind z. B. die Bedienung von Komforteinrichtungen wie Klimaanlage, Navigationsgerät, Radio und/oder die Einstellung fahrzeuginterner Einrichtungen wie Sitz, Lenkrad, Spiegel etc. Mit umfasst sind auch jegliche Betätigungen an Bedienelementen wie z. B. Einschalten oder Ausschalten eines Fahrerassistenzsystems, z. B. eines Abstandsregelsystems oder Einparkhilfesystems.

Die Bewertung der auszugebenden Informationen vor ihrer Ausgabe hat den Vorteil, dass nur auf den Zustand und/oder das Verhalten des Fahrers abgestimmte Informationen ausgegeben werden. Die Bewertung der auszugebenden Informationen kann z. B. anhand einer Priorisierung von Informationen erfolgen. Bei den Informationen kann es sich um Informationen handeln, welche die Fahrzeuginsassen bzw. den Fahrer kurz-, mittel- oder langfristig zu einer bestimmten Aktion auffordern oder lediglich zur Kenntnis genommen werden brauchen. In Abhängigkeit von der Bewertung der Information, z. B. ihrer Priorität und des Fahrerzustands und/oder des Fahrerverhaltens kann nun präzise ermittelt werden, welche Informationen in dieser Situation ausgegeben werden, ohne den Fahrer mit zu vielen, aus seiner Sicht unnötigen, Informationen zu versorgen.

Die Informationsquellen umfassen vorteilhafterweise sogenannte Fahrerassistenzsysteme, die den Fahrer bei seiner augenblicklichen Fahrzeugführungsaufgabe unterstützen, z. B. eine Abstandsregeleinrichtung, eine Totwinkelüberwachungseinheit oder allgemeiner ein Spurwechselassistent, eine Kurvenwarneinrichtung und/oder eine Einrichtung zur automatischen Fahrspurerkennung bzw. zur automatischen Spurführung. Selbstverständlich können auch weitere zukünftige Fahrerassistenzsysteme mit umfasst sein, z. B. eine Stop-and-Go-Regeleinrichtung, eine Fußgängererkennung und/oder ein Kollisionsvermeidungssystem. Bei Fahrerassistenzsystemen ist es besonders wichtig, dass der Fahrer die Informationen, die ausgegeben werden, als hilfreich und nicht als überflüssig empfindet. Dadurch akzeptiert der Fahrer das System und folgt seinen Hinweisen, was zu einer höheren Verkehrssicherheit beiträgt.

Informationen von Fahrerassistenzsystemen fordern typischerweise den Fahrer kurzfristig zu einer Aktion auf. Typische Informationen, auf die nur mittel- oder langfristig, d. h. nicht vor Ablauf von z. B. einigen Sekunden, reagiert werden muß, sind typische Betriebsstörungsmeldungen, wie über einen zu geringen Motorölstand, eine defekte Lampe etc., aber auch z. B. ein Telefonanrufsignal. Typische Informationen, die zu keiner besonderen fahrzeugbezogenen Aktion auffordern, sind z. B. zahlreiche Betriebszustandsinformationen darüber, ob bestimmte Fahrzeugkomponenten momentan aktiviert oder deaktiviert sind, aber auch die von einem Unterhaltungselektronikteil bereitgestellten Musik- und Sprachinformationen. Eine Priorisierung nach der Zeit, in der auf eine Information reagiert werden muss, ist vorteilhaft bei der Bewertung der auszugebenden Informationen.

Bei einer vorteilhaften Weiterbildung der Erfindung wird die Fahrerzustandserkennung und/oder die Fahrerverhaltenserkennung anhand von Daten von Fahrsystemen und/oder Komfortsystemen im Fahrzeug durch eine Fahrerzustandserkennung und/oder Fahrerverhaltenserkennung anhand von Daten von Fahrerbeobachtungssystemen ergänzt. Ein Fahrerbeobachtungssystem basiert insbesondere auf Aufnahmen des Fahrers z. B. mit einer Kamera und/oder auf Aufnahme der vom Fahrer gemachten Äußerungen, z. B. mit einem Mikrofon. Die aufgenommenen Bildmuster und/oder Tonmuster werden dann mit gespeicherten Mustern verglichen und so der Zustand und/oder das Verhalten des Fahrers ermittelt. Durch die Daten des Fahrerbeobachtungssystems zusätzlich zu den Daten der Fahrsysteme und/oder Komfortsysteme wird eine höhere Zuverlässigkeit der Fahrerzustandserkennung und/oder der Fahrerverhaltenserkennung erreicht. Dies ist besonders vorteilhaft, wenn sowieso ein Mikrofon und/oder eine Kamera verbaut ist, z. B. für die Sprachbedienung für Komfortfunktionen und/oder für die Telefon-Freisprecheinrichtung und/oder zur Personenerkennung für ein Fahrberechtigungssystem. Durch die Speicherung und Auswertung der Ton- und/oder Bildmuster, die zur Fahrerzustandserkennung und/oder Fahrerverhaltenserkennung nötig sind, entsteht dann zwar ein Zusatzaufwand gegenüber dem Informationssystem, das ausschließlich die sowieso vorliegenden Daten der Fahr- und Komfortsysteme verwendet, aber mittels dieses Zusatzaufwands wird eine noch bessere Zuverlässigkeit der Fahrerzustandserkennung und/oder der Fahrerverhaltenserkennung erreicht.

In einer vorteilhaften Weiterbildung der Erfindung wird ermittelt, dass eine Zeitlang Tl₀ keine Daten der ersten Kategorie vorliegen. In diesem Fall geht das Informationssystem in einen Zustand, in dem die Ausgabe von Informationen eher gefördert und/oder die Empfindlichkeit der Informationsquellen, z. B. des Fahrerassistenzsystems, erhöht wird.

Besonders einfach gestaltet sich der Zugriff des Informationssystems auf die Daten der Fahrsysteme, auf die Daten der Komfortsysteme, auf die Daten der Fahrerbeobachtungssysteme und/oder auf die Informationsquellen, wenn das Informationssystem mit den Fahrsystemen, den Komfortsystemen und/oder den Fahrerbeobachtungssystemen über einen Datenbus verbunden ist. In diesem Fall tauschen die Fahrsysteme, die Komfortsysteme, die Fahrerbeobachtungssysteme und/oder die Informationsquellen auf dem Bus die Daten untereinander aus. Das Informationssystem ist ein weiterer Busteilnehmer, der an der Kommunikation teilnimmt und über den Bus die fahrerzustandsrelevanten bzw. fahrerverhaltensrelevanten Daten empfängt. In einer Weiterbildung der Erfindung kann das Informationssystem auch gezielt Daten über den Datenbus anfordern. Es sind hierfür verschiedene Busarchitekturen ebenfalls denkbar. So können z. B. die Fahrsysteme über einen oder mehrere Busse, z. B. CAN (Controller Area Network) mit hoher Übertragungsgeschwindigkeit und/oder LIN (Local Interconnect Network), verbunden sein, die Komfortsysteme über einen oder mehrere weitere Busse, z. B. CAN mit niedrigerer und/oder hoher Übertragungsgeschwindigkeit, D2B (Domestic Digital Bus), MOST (Media Oriented Systems Transport) und/oder eine drahtlose Funkschnittstelle, wie Bluetooth, verbunden sein. Die Verbindung der Busse untereinander erfolgt dann je nach Grad der Protokollumsetzung z. B. über einen Router, eine Bridge oder ein Gateway. Es ist ebenfalls denkbar, dass die Vernetzung nicht nach Fahrsystemen und Komfortsystemen getrennt erfolgt, sondern dass das Informationssystem mit den Fahrsystemen, den Komfortsystemen, den Informationsquellen und/oder mit den Fahrerbeobachtungssystemen über einen oder mehrere Busse nach beliebigen Architekturen verbunden ist. Busse zur Datenübertragung sind dann z. B. CAN mit hoher und/oder niedriger Übertragungsgeschwindigkeit und/oder LIN und/oder D2B und/oder MOST und/oder Bluetooth.

Bevorzugte Ausführungsbeispiele der Erfindung werden anhand der zugehörigen Zeichnungen nachfolgend beschrieben. Es zeigen jeweils in schematischer Darstellung,
- **Fig. 1**: ein Informationssystem und
- **Fig. 2**: ein Ablaufdiagramm zur Filterung von auszugebenden Informationen.

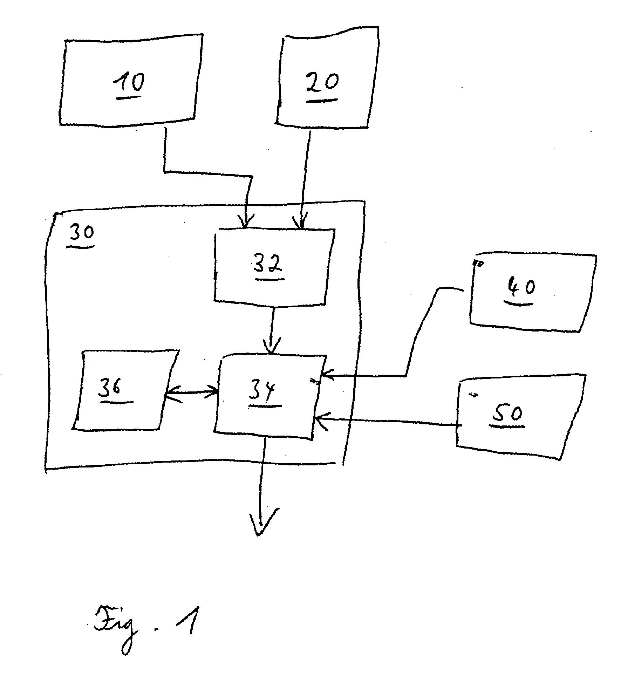

In Fig. 1 ist schematisch ein Informationssystem dargestellt. Daten von Fahrsystemen 10 und/oder Komfortsystemen 20 werden dem Informationssystem 30 zugeführt. Das Informationssystem 30 besteht aus einer Einheit zum Ermitteln des Fahrerzustands bzw. des Fahrerverhaltens 32, einer Einheit zur Bewertung der auszugebenden Informationen 34, und einem Speicher 36 zum Zwischenspeichern von auszugebenden Informationen, deren Ausgabe aufgeschoben wurde. Aus den Informationsquellen 40, 50 werden dem Informationssystem 30 auszugebende Informationen zugeführt. In modernen Fahrzeugen stehen viele Daten über den Status des Fahrzeugs, das Bedienverhalten des Fahrers und weitere Fahrer- bzw. Fahrzeugparameter zur Verfügung. Bei einer Vernetzung der Komponenten 10, 20, 30, 40 und 50 stehen ein großer Teil dieser Informationen in einem Bus-Netzwerk zur Verfügung, z. B. CAN, LIN, MOST, Bluetooth, und sind dadurch leicht zugänglich.

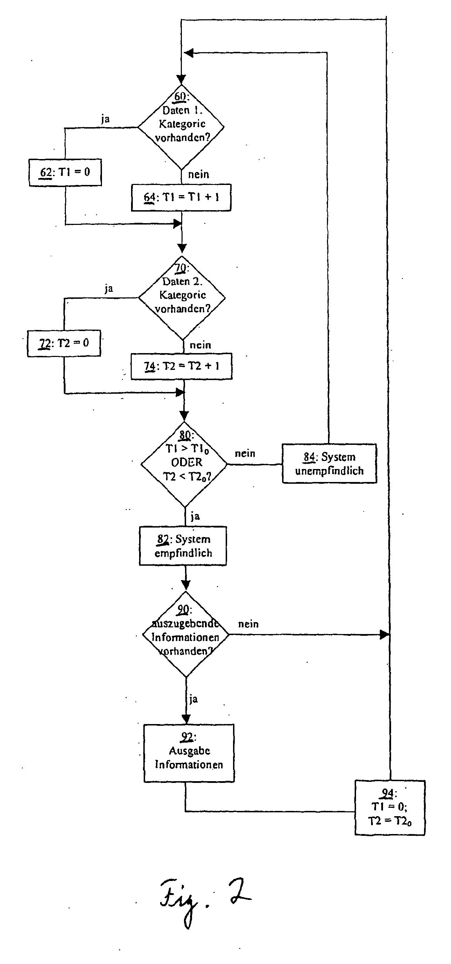

Das Informationssystem 30 ermittelt in der Einheit 32 aus fahrerzustandsrelevanten bzw. fahrerverhaltensrelevanten Daten der Systeme 10 und 20 den Fahrerzustand bzw. das Fahrerverhalten und verknüpft diese in der Einheit 34 mit auszugebenden Informationen von Fahrerassistenzsystemen 40 und/oder weiteren Informationsquellen 50, z. B. einem Navigationssystem, einem Telefon, einem Audiosystem, Fahrzeugsensoren für Kühlwassertemperatur, Tankstand, Lampenzustand. Dabei werden in der Einheit 34 die auszugebenden Informationen bewertet. Vorteilhafterweise erfolgt die Bewertung in Abhängigkeit vom ermittelten Fahrerzustand bzw. vom ermittelten Fahrerverhalten. Dabei wird in der Einheit 34 mittels eines in Fig. 2 schematisch dargestellten Ablaufs ermittelt, ob Informationen ausgegeben werden.

Der in Fig. 2 schematisch dargestellte Ablauf bezieht sich auf eine Informationsquelle und Informationen einer bestimmten Priorität.

In Schritt 60 wird geprüft, ob fahrerzustandsrelevante bzw. fahrerverhaltensrelevante Daten der ersten Kategorie vorliegen. Diese Daten deuten darauf hin, dass der Fahrer aktiv mit der Fahraufgabe beschäftigt ist und/oder eine Verkehrssituation wahrgenommen und/oder bewusst herbeigeführt hat. Dies können alle Daten von Fahrsystemen sein, die direkt mit der Fahraufgabe zu tun haben, wie z. B. die Bedienung des Brems-, Kupplungs- oder Gaspedals und/oder des Lenkrads, z. B. mit einer Lenkbewegung ≥ 2°. Diese Daten wirken ausgabehemmend - Zweig "ja", Schritt 62. Die Zählervariable für die Zeit T1 wird in Schritt 62 auf 0 zurückgesetzt.

Beim Fehlen von Daten der ersten Kategorie erkennt das Informationssystem den Fahrerzustand der nachlassenden Fahrerkondition, d. h. der zunehmenden Müdigkeit - Zweig "nein". Die Zählervariable für die Zeit T1 wird in Schritt 64 daher um eine Zeiteinheit hochgezählt.

In Schritt 70 wird daraufhin geprüft, ob fahrerzustandsrelevante bzw. fahrerverhaltensrelevante Daten der zweiten Kategorie vorliegen. Diese Daten deuten darauf hin, dass der Fahrer abgelenkt und/oder unkonzentriert ist, so dass er bestimmte Verkehrssituationen nicht oder nur beschränkt wahrnehmen kann. Dies können alle Handlungen im Fahrzeug sein, die nicht direkt mit der Fahraufgabe zu tun haben, die also Komfortsysteme im Fahrzeug betreffen. Beispiele dafür sind die Bedienung von Komforteinrichtungen wie Klimanlage, Navigationsgerät, Radio, die Einstellung von Sitz, Lenkrad und/oder Spiegel. Daten von Fahrerbeobachtungssystemen können ebenfalls Hinweise auf die Ablenkung des Fahrers geben und im Fall der Ablenkung in die zweite Kategorie mit einbezogen werden.

Werden in Schritt 70 Daten der zweiten Kategorie ermittelt, Zweig "ja", so ist der Fahrer offensichtlich abgelenkt und/oder unkonzentriert. Die entsprechende Zählervariable T2 wird in Schritt 72 auf 0 gesetzt.

Werden in Schritt 70 keine Daten der zweiten Kategorie ermittelt, Zweig "nein", so wird die Zählervariable T2 in Schritt 74 um eine Zeiteinheit hochgezählt.

In Schritt 80 ermittelt das System, ob die Zeit T1, die seit den letzten aufgetretenen Daten der ersten Kategorie vergangen ist, größer als der Schwellwert T1₀ ist, oder ob die Zeit T2, die seit den letzten aufgetretenen Daten der zweiten Kategorie vergangen ist, noch unter dem Schwellwert T2₀ liegt. Es wird also geprüft, ob der Fahrer während der zurückliegenden Zeit T1₀ aktiv gefahren ist oder ob er während der zurückliegenden Zeit T2₀ Komfortsysteme bedient hat.

Ist mindestens eine der Bedingungen erfüllt, Zweig "ja", so wird das System in Schritt 82 "empfindlich", d. h. es werden mehr Informationen erzeugt bzw. ausgegeben.

Wird in Schritt 80 ermittelt, dass die Zeitschwelle T1₀ nicht überschritten ist und gleichzeitig die Zeitschwelle T2₀ nicht unterschritten ist, so wird das System in Schritt 84 "unempfindlich", d. h. es werden weniger Informationen erzeugt bzw. ausgegeben, und der Ablauf kehrt zu Schritt 60 zurück.

Nach Schritt 82 wird in Schritt 90 geprüft, ob überhaupt eine auszugebende Information vorliegt. Beim Vorliegen einer Information, Zweig "ja", wird die auszugebende Information in Schritt 92 ausgegeben. Danach werden in Schritt 94 der Zähler T1 auf 0 zurückgesetzt und der Zähler T2 auf die Schwelle T2₀ hochgesetzt. Der Ablauf kehrt zurück zu Schritt 60.

Liegen in Schritt 90 keine Informationen zur Ausgabe vor, Zweig "nein", so kehrt der Ablauf direkt zu Schritt 60 zurück.

Insbesondere Lenkbewegungen eignen sich als fahrerzustandsrelevante bzw. fahrerverhaltensrelevante Daten der ersten Kategorie. Lenkbewegungen lassen sich z. B. erfassen über den Lenkradwinkel, die Gierrate, die Kurvengeschwindigkeit und/oder die Querbeschleunigung des Fahrzeuges. Ein wacher Fahrer führt während der Fahrt ständig Lenkkorrekturen durch. Diese werden durch die Straßengeometrie wie Balligkeit oder Unebenheiten, aber auch durch unwillkürliche, kontinuierliche Mikrokorrekturen verursacht. Mit zunehmender Müdigkeit ändert sich das Lenkverhalten, die Häufigkeit der Lenkkorrekturen nimmt ab.

Die Empfindlichkeit eines Fahrerassistenzsystems, insbesondere eines Fahrspurerkennungssystems lässt sich wie folgt variieren. Es werden die Zeiten zwischen Lenkvorgängen des Fahrers erfasst. Liegt diese Zeit über einem gewissen Schwellwert T1₀, wird das Fahrerassistenzsystem in einen Zustand geschaltet, in dem es bereit ist, eine Warnung auszugeben. Diese Bereitschaft des Fahrerassistenzsystems wird durch das Eintreten des Ereignisses, bei dem dann gewarnt wird, oder durch einen größeren Lenkvorgang beendet. Der größere Lenkvorgang entspricht dabei einem Datum der ersten Kategorie. Durch die Wahl des Zeitschwellwertes T1₀ als größerer oder kleinerer Wert lässt sich dann die Empfindlichkeit des Fahrspurerkennungssystems in Abhängigkeit vom Fahrerzustand verändern. Weist eine häufige Aktivierung des Fahrerassistenzsystems auf eine zunehmende Müdigkeit beim Fahrer hin, so kann der Zeitschwellwert T1₀ typischerweise herabgesetzt werden, um die Empfindlichkeit des Fahrerassistenzsystems zu erhöhen.

Die fahrerzustandsrelevanten bzw. fahrerverhaltensrelevanten Daten der zweiten Kategorie werden mit einbezogen, indem bei Auftreten eines solchen Datums die Bereitschaft des Fahrerassistenzsystems für einen gewissen Zeitraum aktiviert wird. Typische Werte für die Dauer der Aktivierung liegen ungefähr bei Werten T2₀ ≤ 10 s.

Treten fahrerzustandsrelevante bzw. fahrerverhaltensrelevante Daten der ersten Kategorie auf, so bleibt das Fahrerassistenzsystem unempfindlich. Treten während der Zeitdauer bis zum Ablauf des Zeitschwellwertes T1₀ Daten der ersten Kategorie nicht auf, so wird das System wieder empfindlich geschaltet. Wenn gleichzeitig Daten der ersten und der zweiten Kategorie auftreten, so wird das System ebenfalls empfindlich geschaltet.

Die Zeitschwellwerte T1₀ und/oder T2₀ können auch in Abhängigkeit vom Straßentyp, z. B. Autobahn, Bundesstraße, kurvenreiche Bundesstraße, Landstraße, Serpentinen, Landstraße mit Ortsdurchfahrten, angepasst werden. Der Straßentyp kann z. B. über ein Ortungssystem, z. B. GPS, und eine digitale Karte bestimmt werden.

Optional kann das Informationssystem dadurch ergänzt werden, dass auch die Möglichkeit vorgesehen wird, Informationen ganz zu verwerfen, um den Fahrer nur mit den allernötigsten Informationen zu versorgen. Das Verwerfen von Informationen kann z. B. so erfolgen, dass nur noch die Informationen ausgegeben werden, die als sehr kritisch eingestuft sind, während die Informationen, die mehr informativen Charakter haben, verworfen werden.

## Patentansprüche

1. Informationssystem (30) in einem Fahrzeug mit mehreren Informationsquellen (40,50) zur Ausgabe einer jeweils zugehörigen Information, wobei der Zustand und/oder das verhalten des Fahrers anhand von Daten eines oder mehrerer Fahrsysteme (10) des Fahrzeuges und eines oder mehrerer Komfortsysteme (20) des Fahrzeuges ermittelt wird und die auszugebenden Informationen in Abhängigkeit vom Verhalten des Fahrers und/oder vom Zustand des Fahrers erzeugt werden,
**dadurch gekennzeichnet,**
**dass** zur Beurteilung des Verhaltens des Fahrers und/oder dessen Zustandes die Daten in zwei Kategorien eingeteilt werden, wobei
- die Daten der ersten Kategorie ein Verhalten des Fahrers charakterisieren, bei dem der Fahrer aktiv mit der Fahraufgabe beschäftigt ist, und/oder einen Zustand des Fahrers charakterisieren, bei dem der Fahrer sich auf die Fahraufgabe konzentriert, und wobei
- die Daten der zweiten Kategorie ein Verhalten des Fahrers charakterisieren, bei dem der Fahrers mit der Bedienung der Komfortsysteme beschäftigt ist, und/oder einen Zustand des Fahrers charakterisieren, bei dem der Fahrer abgelenkt und/oder unkonzentriert ist.

2. Informationssystem nach Anspruch 1,
**dadurch gekennzeichnet,**
**dass** mindestens eine der Informationsquellen (40,50) die auszugebenden Informationen mit einer Häufigkeit erzeugt, die vom Zustand des Fahrers und/oder vom Verhalten des Fahrers abhängt.

3. Informationssystem nach Anspruch 1 oder 2,
**dadurch gekennzeichnet,**
**dass** die auszugebenden Informationen in Abhängigkeit vom Zustand und/oder Verhalten des Fahrers gefiltert werden.

4. Informationssystem (30) in einem Fahrzeug mit mehreren Informationsquellen (40,50) zur Ausgabe einer jeweils zugehörigen Information, wobei der Zustand und/oder das Verhalten des Fahrers anhand von Daten eines oder mehrerer Fahrsysteme (10) des Fahrzeuges und eines oder mehrerer Komfortsysteme (20) des Fahrzeuges ermittelt wird die auszugebenden Informationen in Abhängigkeit vom Verhalten des Fahrers und/oder vom Zustand des Fahrers gefiltert werden,
**dadurch gekennzeichnet,**
**dass** zur Beurteilung des Verhaltens des Fahrers und/oder dessen Zustandes die Daten in zwei Kategorien eingeteilt werden, wobei
- die Daten der ersten Kategorie ein Verhalten des Fahrers charakterisieren, bei dem der Fahrer aktiv mit der Fahraufgabe beschäftigt ist, und/oder einen Zustand des Fahrers charakterisieren, bei dem der Fahrer sich auf die Fahraufgabe konzentriert, und wobei
- die Daten der zweiten Kategorie ein Verhalten des Fahrers charakterisieren, bei dem der Fahrers mit der Bedienung der Komfortsysteme beschäftigt ist, und/oder einen Zustand des Fahrers charakterisieren, bei dem der Fahrer abgelenkt und/oder unkonzentriert ist.

5. Informationssystem nach einem der vorhergehenden Ansprüche,
**dadurch gekennzeichnet,**
**dass** das eine oder die mehreren Fahrsysteme (10) mindestens ein Bremssystem, mindestens ein Kupplungssystem, mindestens ein Lenksystem und/oder mindestens ein Beschleunigungssystem umfassen.

6. Informationssystem nach einem der vorhergehenden Ansprüche,
**dadurch gekennzeichnet,**
**dass** das eine oder die mehreren Komfortsysteme (20) mindestens eine Klimaanlage, mindestens ein Navigationssystem, mindestens ein Audiosystem und/oder mindestens ein Einstellsystem für die Sitz-, Lenkrad- und/oder Spiegelverstellung umfassen.

7. Informationssystem nach einem der Ansprüche 3 bis 6,
**dadurch gekennzeichnet,**
**dass** die auszugebenden Informationen bewertet und in Abhängigkeit von der Bewertung gefiltert werden.

8. Informationssystem nach einem der vorhergehenden Ansprüche,
**dadurch gekennzeichnet,**
**dass** die Informationsquellen (10,20, 40,50) mindestens ein Fahrerassistenzsystem umfassen.

9. Informationssystem nach einem der vorhergehenden Ansprüche,
**dadurch gekennzeichnet,**
**dass** der Zustand des Fahrers und/oder das Verhalten des Fahrers anhand von Daten eines oder mehrerer Fahrerbeobachtungssysteme des Fahrzeuges ermittelt wird.

10. Informationssystem nach einem der vorangehenden Ansprüche,
**dadurch gekennzeichnet,**
**dass** die Ausgabe der Informationen gehemmt wird und/oder weniger auszugebende Informationen von der Informationsquelle erzeugt werden, falls Daten der ersten Kategorie erkannt werden.

11. Informationssystem nach einem der vorangehenden Ansprüche,
**dadurch gekennzeichnet,**
**dass** die Ausgabe der Informationen gefördert wird und/oder mehr auszugebende Informationen von der Informationsquelle (10,20, 40,50) erzeugt werden, falls Daten der ersten Kategorie länger als eine erste Zeitspanne (T1₀) ausbleiben.

12. Informationssystem nach einem der vorangehenden Ansprüche,
**dadurch gekennzeichnet,**
**dass** für die Dauer einer zweiten Zeitspanne (T2₀) die Ausgabe der Informationen gefördert wird und/oder mehr auszugebende Informationen von der Informationsquelle erzeugt werden, falls Daten der zweiten Kategorie erkannt werden.

13. Informationssystem nach einem der vorhergehenden Ansprüche,
**dadurch gekennzeichnet,**
**dass** das Informationssystem mit dem einen oder den mehreren Fahrsystemen (10), mit dem einen oder den mehreren Komfortsystemen (20), mit dem einen oder den mehreren Fahrerbeobachtungssystemen und/oder mit den Informationsquellen (10,20, 40,50) über einen Bus verbunden ist.

14. Informationssystem nach einem der vorhergehenden Ansprüche,
**dadurch gekennzeichnet,**
**dass** die Informationsquellen (10,20, 40,50) ein oder mehrere Fahrsysteme (10) und/oder ein oder mehrere Komfortsysteme (20) umfassen.

## Claims

1. Information system (30 in a vehicle with a plurality of information sources (40, 50) for the output of information respectively associated with each of them, such that the condition and/or behaviour of the driver is determined with reference to data from one or more driving systems (10) of the vehicle and one or more comfort systems (20) of the vehicle and the information to be emitted is generated as a function of the driver's behaviour and/or condition,
**characterised in that**
to assess the driver's behaviour and/or condition the said data are divided into two categories, such that
- data of the first category characterise a driver's behaviour in which the driver is actively engaged in the task of driving, and/or characterise a driver's condition in which the driver is concentrating on the task of driving, and such that
- data of the second category characterise a driver's behaviour in which the driver is engaged in operating the comfort systems, and/or characterise a driver's condition in which the driver is distracted and/or not concentrating.

2. Information system according to Claim 1,
**characterised in that**
at least one of the information sources (40, 50) generates the information to be emitted with a frequency that depends on the driver's condition and/or behaviour.

3. Information system according to Claims 1 or 2,
**characterised in that**
the information to be emitted is filtered as a function of the driver's condition and/or behaviour.

4. Information system (30) in a vehicle with a plurality of information sources (40, 50) for the output of information respectively associated with each of them, such that the driver's condition and/or behaviour is determined with reference to data from one or more driving systems (10) of the vehicle and from one or more comfort systems (20) of the vehicle, and the information to be emitted is filtered as a function of the driver's condition and/or behaviour,
**characterised in that**
to assess the driver's behaviour and/or condition the said data are divided into two categories, such that
- data of the first category characterise a driver's behaviour in which the driver is actively engaged in the task of driving, and/or characterise a driver's condition in which the driver is concentrating on the task of driving, and such that
- data of the second category characterise a driver's behaviour in which the driver is engaged in operating the comfort systems, and/or characterise a driver's condition in which the driver is distracted and/or not concentrating.

5. Information system according to any of the preceding claims,
**characterised in that**
the one or more driving systems (10) include at least one brake system, at least one clutch system, at least one steering system and/or at least one acceleration system.

6. Information system according to any of the preceding claims,
**characterised in that**
the one or more comfort systems (20) include at least one air-conditioning system, at least one navigation system, at least one audio system and/or at least one adjustment system for the seat, the steering-wheel and/or the mirrors.

7. Information system according to any of Claims 3 to 6,
**characterised in that**
the information to be emitted is evaluated and filtered as a function of the evaluation.

8. Information system according to any of the preceding claims,
**characterised in that**
the information sources (10, 20, 40, 50) include at least one driver assistance system.

9. Information system according to any of the preceding claims,
**characterised in that**
the driver's condition and/or behaviour is determined with reference to data from one or more driver observation systems of the vehicle.

10. Information system according to any of the preceding claims,
**characterised in that**
the output of information is inhibited and/or less information for output is produced by the information sources if data of the first category are recognised.

11. Information system according to any of the preceding claims,
**characterised in that**
the output of information is demanded and/or more information for output is produced by the information sources (10, 20, 40, 50) if data of the first category have been lacking for longer than a first time interval (T1₀)_{.}

12. Information system according to any of the preceding claims,
**characterised in that**
for the duration of a second time interval (T2₀) the output of information is demanded and/or more information for output is produced by the information sources if data of the second category are recognised.

13. Information system according to any of the preceding claims,
**characterised in that**
the information system is connected via a bus system to the one or more drive systems (10), to the one or more comfort systems (20), to the one or more driver observation systems and/or to the information sources (10, 20, 40, 50).

14. Information system according to any of the preceding claims,
**characterised in that**
the information sources (10, 20, 40, 50) include one or more driving systems (10) and/or one or more comfort systems (20).

## Revendications

1. Système d'informations (30) dans un véhicule comprenant plusieurs sources d'informations (40, 50) pour émettre des informations correspondantes, l'état et/ou le comportement du conducteur étant déterminé en s'appuyant sur des données d'un ou plusieurs systèmes de conduite (10) du véhicule et un ou plusieurs systèmes de confort (20) du véhicule et des informations émises en rapport avec le comportement du conducteur et/ou l'état du conducteur étant produites,
**caractérisé en ce que,**
• les données sont divisées en deux catégories pour évaluer le comportement du conducteur et/ou son état,
• les données de la première catégorie caractérisant un comportement du conducteur, dans lequel le conducteur est occupé activement avec la tâche de conduite, et/ou caractérisant un état du conducteur dans lequel le conducteur se concentre sur la tâche de conduite, et
• les données de la seconde catégorie caractérisant un comportement du conducteur, dans lequel le conducteur est occupé au maniement du système de confort, et/ou caractérisant un état du conducteur dans lequel le conducteur est distrait et/ou non concentré.

2. Système d'informations selon la revendication 1, **caractérisé en ce que,** au moins une des sources d'informations (40, 50) des informations émises est produite avec une fréquence dépendant de l'état du conducteur et/ou du comportement du conducteur.

3. Système d'informations selon la revendication 1 ou 2, **caractérisé en ce que**, les informations émises à l'aide de l'état et/ou du comportement du conducteur sont filtrées.

4. Système d'informations (30) dans un véhicule comprenant plusieurs sources d'informations (40, 50) pour émettre des informations correspondantes, l'état et/ou le comportement du conducteur étant déterminés en s'appuyant sur des données d'un ou plusieurs systèmes de conduite (10) du véhicule et un ou plusieurs systèmes de confort (20) du véhicule et des informations émises en rapport avec le comportement du conducteur et/ou l'état du conducteur étant filtrées,
**caractérisé en ce que,**
• les données sont divisées en deux catégories pour évaluer le comportement du conducteur et/ou son état,
• les données de la première catégorie caractérisant un comportement du conducteur, dans lequel le conducteur est occupé activement avec la tâche de conduite, et/ou caractérisant un état du conducteur dans lequel le conducteur se concentre sur la tâche de conduite, et
• les données de la seconde catégorie caractérisant un comportement du conducteur, dans lequel le conducteur est occupé au maniement du système de confort, et/ou caractérisant un état du conducteur dans lequel le conducteur est distrait et/ou non concentré.

5. Système d'informations selon l'une quelconque des revendications précédentes, **caractérisé en ce que,** le ou les plusieurs systèmes de conduite (10) comprennent au moins un système de freinage, au moins un système d'embrayage, au moins un système de direction et/ou au moins un système d'accélération.

6. Système d'informations selon l'une quelconque des revendications précédentes, **caractérisé en ce que**, le ou les plusieurs systèmes de confort (20) comprennent au moins un climatiseur, au moins un système de navigation, au moins un système audio et/ou au moins un système de réglage pour le réglage du siège, du volant et/ou du rétroviseur.

7. Système d'informations selon l'une quelconque des revendications 3 à 6, **caractérisé en ce que,** les informations émises sont évaluées et filtrées en fonction de l'évaluation.

8. Système d'informations selon l'une quelconque des revendications précédentes, **caractérisé en ce que**, les sources d'informations (10, 20, 40, 50) comprennent au moins un système d'assistance au conducteur.

9. Système d'informations selon l'une quelconque des revendications précédentes, **caractérisé en ce que**, l'état du conducteur et/ou le comportement du conducteur est déterminé en s'appuyant sur les données d'un ou plusieurs systèmes d'observation du conducteur du véhicule.

10. Système d'informations selon l'une quelconque des revendications précédentes, **caractérisé en ce que,** l'émission des informations est ralentie et/ou moins d'informations émises des sources d'informations sont produites dans le cas où des données de la première catégorie sont révélées.

11. Système d'informations selon l'une quelconque des revendications précédentes, **caractérisé en ce que,** l'émission des informations est favorisée et/ou davantage d'informations émises des sources d'informations (10, 20, 40, 50) sont produites dans le cas où les données de la première catégorie manquent plus longtemps qu'une première période (T1₀).

12. Système d'informations selon l'une quelconque des revendications précédentes, **caractérisé en ce que**, pour la durée d'une seconde période (T2₀), l'émission des informations est favorisée et/ou davantage d'informations émises des sources d'informations sont produites, dans le cas où des données de la seconde catégorie sont révélées.

13. Système d'informations selon l'une quelconque des revendications précédentes, **caractérisé en ce que**, le système d'informations est connecté à un ou plusieurs systèmes de conduite (10), à un ou plusieurs systèmes de confort (20), à un ou plusieurs systèmes d'observation du conducteur et/ou aux sources d'informations (10, 20, 40, 50) par l'intermédiaire d'un bus.

14. Système d'informations selon l'une quelconque des revendications précédentes, **caractérisé en ce que**, les sources d'informations (10, 20, 40, 50) comprennent un ou plusieurs systèmes de conduite (10) et/ou un ou plusieurs systèmes de confort (20).
